(19) Europäisches Patentamt
European Patent Office
Office européen des brevets

(11) Veröffentlichungsnummer: **0 019 127**
**A1**

(12) # EUROPÄISCHE PATENTANMELDUNG

(21) Anmeldenummer: 80102271.6

(22) Anmeldetag: 26.04.80

(51) Int. Cl.³: **C 08 L 69/00**

(30) Priorität: 10.05.79 DE 2918883

(43) Veröffentlichungstag der Anmeldung:
26.11.80 Patentblatt 80/24

(84) Benannte Vertragsstaaten:
DE FR GB IT NL

(71) Anmelder: BAYER AG
Zentralbereich Patente, Marken und Lizenzen
D-5090 Leverkusen 1, Bayerwerk(DE)

(72) Erfinder: Druschke, Frank, Dr.
Germaniastrasse 101
D-4150 Krefeld(DE)

(72) Erfinder: Cohnen, Wolfgang, Dr.
Heymannstrasse 36
D-5090 Leverkusen(DE)

(72) Erfinder: Schmidt, Manfred, Dr.
c/o Mobay Chemical Co.,
New Martinsville, VA 26155(US)

(54) **Flammwidrige PC-Legierungen mit erhöhter Spannungsriss-Korrosionsbeständigkeit, ihre Herstellung und Verwendung.**

(57) Formmassen, bestehend aus
a) thermoplastischen aromatischen Polycarbonaten,
b) einer organischen Halogenverbindung,
c) einem Alkali- oder Erdalkalisalz, einer anorganischen Protonensäure und/oder einer organischen Brönsted-Säure mit mindestens einem Kohlenstoffatom
d) einem Stoff, der die Abtropfneigung von Polycarbonat reduziert,
dadurch gekennzeichnet, daß sie
e) einen weiteren Thermoplasten enthalten, der eine Grenzdehnung $\varepsilon_{max}$ von mindestens 1,4% aufweist,
ihre Herstellung und Verwendung zur Herstellung von Formteilen und Folien.

EP 0 019 127 A1

Croydon Printing Company Ltd

BAYER AKTIENGESELLSCHAFT
Zentralbereich
Patente, Marken und Lizenzen

5090 Leverkusen, Bayerwerk
PS/lz

# Flammwidrige PC-Legierungen mit erhöhter Spannungsrißkorrosionsbeständigkeit, ihre Herstellung und Verwendung

Gegenstand der vorliegenden Erfindung sind Formmassen bestehend aus

a) thermoplastischen aromatischen Polycarbonaten auf Basis von Bis-(hydroxyaryl)-alkanen, -cycloalkanen, 4,4'-Dihydroxydiphenyläther, 4,4'-Dihydroxydiphenylsulfid, 2,2-Bis-(3,5-dimethyl-4-hydroxyphenyl)-propan oder 4,4'-Dihydroxydiphenylsulfon,

b) einer organischen Halogenverbindung, vorzugsweise einer aromatischen organischen Halogenverbindung und insbesondere einer Brom- und/oder Chlorverbindung,

c) einem Alkali- oder Erdalkalisalz einer anorganischen Protonensäure oder einer organischen Brönsted-Säure mit mindestens einem Kohlenstoffatom, vorzugsweise einem Alkalisalz, insbesondere einem Li-, Na- oder K-Salz,

d) einem Stoff, der die Abtropfneigung von Polycarbonaten reduziert, wie beispielsweise Polytetrafluorethylene, Polysiloxane, Glasfasern oder Kohlenstofffasern,

die dadurch gekennzeichnet sind, daß sie

e) einen weiteren Thermoplasten enthalten, der nach 6-tägiger Lagerung in Luft bei 80°C gemäß dem in "Kunststoffe" 65 (1975) 3, Seite 155 - 157 beschriebenen Prüfverfahren eine Grenzdehnung $\varepsilon_{max}$ von mindestens 1,4 % aufweist, wobei als weitere Thermoplaste

beispielsweise

e 1) ABS-Polymerisate,

e 2) Polyalkylenester auf Basis aromatischer Polycarbonsäuren und aliphatischer Polyole,

e 3) aliphatische Polyamide auf Basis von aliphatischen Polycarbonsäuren und aliphatischen Polyaminen oder auf Basis von aliphatischen Aminocarbonsäuren

e 4) Polyphenylenoxide oder

e 5) Polyolefine

Verwendung finden können.

Die Verbesserung der Flammwidrigkeit von thermoplastischen Polycarbonaten läßt sich in bekannter Weise durch den Zusatz oder die Einarbeitung von Halogenverbindungen, Salzen organischer oder anorganischer

Säuren, wie insbesondere Alkalisalzen und gegebenenfalls einem Stoff, der die Abtropfneigung von Polycarbonaten im Brandfall unterdrückt, erreichen, wie dies beispielsweise in der DOS 21 48 589 (Le A 13 970) und in der DOS 27 03 710 (Le A 17 759) beschrieben ist.

Gegenstand der vorliegenden Erfindung sind flammwidrige Polymerlegierungen für den Einsatz im Hochtemperaturbereich. Die erfindungsgemäßen Polymerlegierungen werden erhalten durch Zumischen geeigneter anderer Thermoplasten zu flammwidrigen Polycarbonat-Formmassen, wodurch flammwidrige Polycarbonatlegierungen mit einer gegenüber reinem Polycarbonat erhöhten Spannungsrißkorrosionsbeständigkeit erhalten werden.

a) Als die den erfindungsgemäßen flammwidrigen Polycarbonatlegierungen zugrundeliegenden thermoplastischen aromatischen Polycarbonate werden Homopolycarbonate und/oder Copolycarbonate aus Bis-(hydroxyaryl)-alkanen und/oder Bis-(hydroxyaryl)-cycloalkanen und/oder Bis-(4-hydroxyphenyl)-ether und/oder Bis-(4-hydroxyphenyl)-sulfid und/oder 2,2-Bis-(3,5-dimethyl-4-hydroxyphenyl)-propan und/oder 4,4'-Dihydroxydiphenylsulfon verstanden; als Hydroxyaryl-Reste sind in diesem Zusammenhang insbesondere Hydroxyphenyl-Reste, und ganz besonders 4-Hydroxyphenyl-Reste zu verstehen, die noch zusätzlich Substituenten tragen können. Als Alkane sind vorzugsweise $C_1$-$C_5$-Alkylidene und $C_1$-$C_5$-Alkylene, als Cycloalkane

sind vorzugsweise $C_5$-$C_{10}$-Cycloalkylidene- und $C_5$-$C_{10}$-Cycloalkylene zu verstehen. Den erfindungsgemäß geeigneten Polycarbonaten können eines oder mehrere der folgenden Diphenole zugrunde liegen:

2,2-Bis-(4-hydroxyphenyl)-propan
2,4-Bis-(4-hydroxyphenyl)-2-methylbuten
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
4,4'-Dihydroxydiphenylsulfid
2,2-Bis-(3,5-dimethyl-4-hydroxyphenyl)-propan und
4,4'-Dihydroxydiphenylsulfon.

Diese und weitere geeignete Diphenole sind z.B. in der US-Patentschrift 3 038 365, in den deutschen Offenlegungsschriften 1 570 703, 2 063 050 und in der Monographie "H. Schnell, Chemistry and Physics of Polycarbonates, Intersience Publishers, New York, 1964" beschrieben.

Bevorzugte Diphenole z.B.:

2,2-Bis-(4-hydroxyphenyl)-propan
1,1-Bis-(4-hydroxyphenyl)-cyclohexan
α,α'-Bis-(4-hydroxyphenyl)-p-diisopropylbenzol
4,4'-Dihydroxydiphenylsulfid und
2,2-Bis-(3,5-dimethyl-4-hydroxyphenyl)-propan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als bevorzugt genannten Diphenole zugrundeliegen. Besonders bevorzugt sind weiterhin Polycarbonate allein auf Basis von 2,2-Bis-(4-hydroxyphenyl)-propan.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschrieben ist.

Die aromatischen Polycarbonate können durch den Einbau geringer Mengen, vorzugsweise von Mengen zwischen 0,05 und 2,0 Mol-% (bezogen auf eingesetzte Diphenole) an drei- oder mehr als dreifunktionellen Verbindungen, insbesondere solchen mit drei oder mehr als drei phenolischen Hydroxygruppen, verzweigt sein.

Polycarbonate dieser Art sind z.B. in den deutschen Offenlegungsschriften 1 570 533, 1 595 762, 2 116 974, 2 113 347 und 2 500 092, der britischen Patentschrift 1 079 821 und der US-Patentschrift 3 511 514 beschrieben.

Einige der verwendbaren Verbindungen mit drei oder mehr als drei phenolischen Hydroxygruppen sind beispielsweise Phloroglucin, 4,4-Dimethyl-2,4,6-tri-(4-hydroxyphenyl)-heptan-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-äthan, Tri-(4-hydroxyphenyl)-phenylmethan, 2,2-Bis-/4,4-Bis-(4-hydroxyphenyl)-cyclohexyl/-propan, 2,4-Bis-(4-hydroxyphenylisopropyl)-phenyl-2,6-Bis-(2-hydroxy-5'-methyl-benzyl)-4-methylphenol, 2-(4-hydroxyphenyl)-2-(2,4-dihydroxyphenyl)-propan und 1,4-Bis-(4,4"-dihydroxytriphenylmethyl)-benzol. Einige der sonstigen dreifunktionellen Verbindungen sind 2,4-Dihydroxybenzoesäure, Trimesinsäure, Cyanurchlorid, 3,3-Bis-(4-hydroxyphenyl)-2-oxo-2,3-dihydroindol und 3,3-Bis-(3-methyl-4-hydroxyphenyl)-2-oxo-2,3-dihydroindol.

Die thermoplastischen aromatischen Polycarbonate sollen in der Regel mittlere Gewichtsmittel-Molekulargewichte $\bar{M}_w$ von 10.000 bis über 200.000, vorzugsweise von 20.000 bis 80.000 haben, ermittelt durch die Methode der Lichtzerstreuung.

Im Falle der Polycarbonatmischungen können den hochmolekularen Polycarbonaten mit $\bar{M}_w$ von 10.000 bis 200.000 auch kleine Anteile niedermolekularer Polycarbonate, z.B. mit einem mittleren Polymerisationsgrad von 2 - 20, zugemischt sein.

Die den erfindungsgemäßen Polycarbonat-Formmassen der folgenden Beispiele zugrundeliegenden aromatischen Polycarbonate sind Homopolymere des 2,2-Bis-(4-hydroxyphenyl)-propans (nachfolgend als Bisphenol A bezeichnet), die durch Reaktion von im wesentlichen äquimolaren Mengen Bisphenol A und Phosgen nach dem Zweiphasengrenzflächenverfahren mit Natriumhydroxid, Triäthylamin und p-tert.-Butylphenol unter Standardbedingungen hergestellt worden sind.

Die relativen Lösungsviskositäten der Polycarbonate betragen 1,24 bis 1,36, gemessen bei 25°C in einer 0,5 gew.-%igen Lösung in Methylenchlorid.

b) Organische Halogenverbindungen im Sinne der vorliegenden Erfindung sind:

Aromatische Polycarbonate auf Basis von 2,2-Bis-(3,5-Dibrom-4-hydroxyphenyl)-propan und/oder 2,2-Bis-(3,5-Dichlor-4-hydroxyphenyl)-propan vom Kondensationsgrad 2 - 20 (vgl. DOS 2 243 226).

Andere Halogenverbindungen im Sinne der vorliegenden Erfindung sind solche, die mit Polycarbonat oder einer anderen Komponente der erfindungsgemäßen Polycarbonatlegierung vermischen lassen und die sich bei den Temperaturen, bei denen das Polycarbonat verarbeitet wird, nicht verflüchtigen. Geeignete organische Halogenverbindungen sind beispielsweise in der DE-OS 18 02 184, der US-PS 3 535 300 (No 98.1), der DE-OS 27 44 016, der US-PS 4 110 299 sowie den japanischen Offenlegungsschriften JA-OS 75-64337 und JA-OS 75-119041 beschrieben.

Als geeignete Halogenverbindungen im Sinne der Erfindung werden beispielsweise verwendet:

Tetrahalogenphthalimid (vgl. DOS 2 703 710)
Decabromdiphenyläther
Pentabromphenoxyäthan
Tribromphenoxyäthan
Decabromdiphenylcarbonat
Decachloridiphenylcarbonat
Tetrabromphthalsäure-di-tribromphenylester oder
Tetrabromphthalsäure-di-trichlorphenylester
Tetrabromterephthalsäure-di-tribromphenylester oder
Tetrabromterephthalsäure-di-trichlorphenylester
Tetrachlorphthalsäure-di-tribromphenylester oder
Tetrachlorphthalsäure-di-trichlorphenylester
Tetrachlorterephthalsäure-di-tribromphenylester oder
Tetrachlorterephthalsäure-di-trichlorphenylester.

Geeignete Halogenverbindungen im Sinne der vorliegenden Erfindung sind auch oligomere oder polymere brom- und/oder chlorhaltige Verbindungen, wie beispielsweise Oligo- oder Polybromstyrole oder Polychlorstyrole (vgl. DOS 26 45 415).

Geeignete Mengen an halogenhaltigen Verbindungen im Sinne der vorliegenden Erfindung sind 0,01 bis 5 Gew.-%, bezogen jeweils auf das Gesamtgewicht der flammwidrigen Polycarbonatlegierung.

Durch Einkondensation geeigneter Mengen halogenhaltiger Bisphenole wie beispielsweise Tetrabrom- oder Tetrachlorbisphenol A während der Herstellung der den erfindungsgemäßen Formmassen zugrundeliegenden aromatischen Polycarbonate a) kann ebenfalls die Inkorporierung des notwendigen Halogengehaltes in die erfindungsgemäßen Polycarbonatlegierungen erfolgen.

c) Geeignete Alkali- und/oder Erdalkalisalze im Sinne der Erfindung sind beispielsweise solche von anorganischen Protonensäuren. Anorganischen Protonensäuren im Sinne der Erfindung sind Brönsted-Säuren, die Alkali- oder Erdalkalisalze bilden können (zum Ausdruck "Brönsted-Säuren" vgl. Fieser & Fieser "Organic Chemistry", 1965, S. 595, Interscience publishers N.Y., USA), wie zum Beispiel Schwefelsäure, Fluorwasserstoffsäure, Salzsäure, Bromwasserstoffsäure, meta-, ortho- oder pyro-Phosphorsäure und Protonensäuren komplexer Fluormetallverbindungen. Als derartige Alkali- oder Erdalkalisalze komplexer Fluormetallverbindungen können z.B. verwendet werden:

Hexafluoraluminate
Hexafluortianate
Hexafluorantimonate
Hexafluorsilikate
Hexafluorwolframate
Hexafluorzirkonate
Hexafluorphosphate
Tetrafluorborate.

Geeignete Alkali- oder Erdalkalisalze organischer Säuren sind im Sinne der Erfindung solche von organischen Brönsted-Säuren mit mindestens einem Kohlenstoffatom, die Alkali- oder Erdalkalisalze bilden können.

Solche gegebenenfalls substituierten organischen Säuren können OH- oder NH-acide Verbindungen sein, wie beispielsweise Carbonsäuren, Sulfonsäuren, Phosphonsäuren, Thiophosphonsäuren, NH-acide Sulfonamide oder Sulfonimide, mono- oder mehrfunktionelle Phenole oder Alkohole. Sie müssen mindestens ein C-Atom haben und können vorzugsweise zwischen 2 und 30 C-Atome enthalten.

Geeignete Alkali- oder Erdalkalisalze organischer Brönsted-Säuren sind ebenfalls Salze folgender Substanzklassen:

Phosphorsäureestersalze bzw. Phosphorsäurethioestersalze der allgemeinen Strukturen (I) und (II)

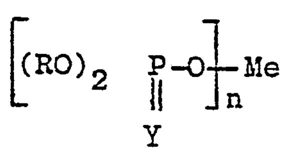

(I) Y = O,S

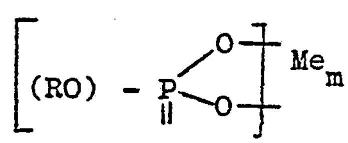

(II) Y = O,S

mit Me = Alkali und n = 1 sowie m = 2; Me = Erdalkali mit n = 2 und m = 1

R = $C_1$ - $C_{20}$ Alkyl, Cycloalkyl, $C_2$ - $C_{20}$ Alkenyl, Cycloalkenyl, $C_6$ - $C_{18}$ Aryl, wobei der Arylrest gegebenenfalls durch 1 - 4 Halogenatome wie F, Cl oder Br, durch CN-, $CF_3$- oder $C_1$ - $C_{18}$ Alkyl oder Cycloalkyl oder $C_2$ - $C_{18}$ Alkenyl oder Cycloalkenylgruppen substituiert sein kann.

Geeignete Alkali- oder Erdalkalisalze im Sinne der Erfindung können auch solche der allgemeinen Struktur (III) sein:

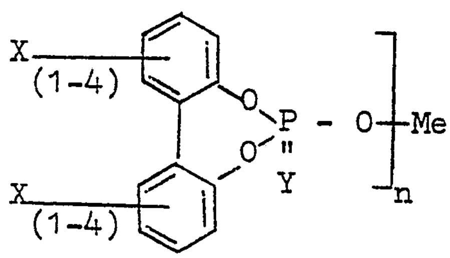

(III) Y = O,S

mit Me = Alkali und n = 1
Me = Erdalkali und n = 2
X = F, Cl, Br, CN, $CF_3$

Weiterhin können Alkali- oder Erdalkalisalze der allgemeinen Struktur (IV) verwendet werden:

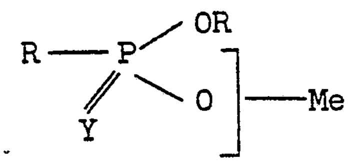

(IV) Y = O,S

mit Me = Alkali und n = 1; Me = Erdalkali und n = 2
R = R der Struktur (I) bzw. (II).

Geeignete Alkalisalze sind die Li-, Na- und K-Salze. Geeignete Erdalkalisalze sind die Calciumsalze. Die Salze werden auch der in der DOS 27 03 710 beschriebenen Weise in einer Menge von 0,02 bis 1 Gew.-%, vorzugsweise 0,04 bis 0,5 Gew.-%, bezogen auf das Gesamtgewicht der Polycarbonatlegierung zugegeben.

Weitere geeignete Alkali- und/oder Erdalkalisalze im Sinne der Erfindung sind beispielsweise in den DOS 24 60 935, 24 60 944, 24 60 945, 24 60 946, 24 61 145, 25 35 261, 25 35 262, 25 35 263, 26 31 756, 26 43 256, 26 44 114, 26 45 415, 26 46 120, 26 47 271, 26 48 131, 26 53 327, 26 48 128, 27 44 015, 27 44 016, 27 44 017, 27 44 018, 27 45 592, 27 46 906 beschrieben.

Bevorzugte Salze sind die Alkalisalze und darunter wiederum die Li-, Na- und K-Salze. Die gemäß c) geeigneten Alkalisalze und Erdalkalisalze sollen vorzugsweise einen pH-Wert zwischen 5 und 9, insbesondere zwischen 6,5 und 7,5 haben, gemessen an 1 gew.-%igen Lösungen oder Suspensionen der Salze in Wasser bei 20°C.

d) Geeignete Stoffe, die das Abtropfen von Polycarbonaten insbesondere im Brandfall reduzieren beziehungsweise ganz unterdrücken, sind im Sinne der Erfindung Stoffe, wie Polytetrafluorethylene (vgl. DOS 25 35 262), Polysiloxane (vgl. DOS 25 35 261) sowie Glasfasern (vgl. DOS 25 35 263 und DOS 21 48 598). Diese Materialien sind zu 0,01 bis 3 Gew.-%, bezogen auf das Gesamtgewicht der Polycarbonatlegierung, in den erfindungsgemäßen Polycarbonatlegierungen enthalten.

e) Geeignete ABS-Polymerisate im Sinne der Erfindung werden durch Polymerisation von Monomeren, vorzugsweise von Styrol und Acrylnitril, in Gegenwart eines Dien-Kautschuks hergestellt. In diesen Produkten wird in Gegenwart eines Kautschuks eine Monomerenmischung von 95 - 50 Gew.-% Styrol und 5 bis 50 Gew.-% Acrylnitril polymerisiert. Das Pfropfpolymerisat kann aus 80 - 10 Gew.-Teilen Kautschuk und 20 - 90 Gew.-Teilen Copolymerisat bestehen, das mindestens teilweise chemisch mit dem Kautschuk verbunden ("aufgepfropft") ist.

Dien-Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% eines niederen Alkylesters von Acryl- oder Methacrylsäure (z.B. Methacrylat, Ethylacrylat, Methylmethacrylat und Ethylmethacrylat). Geeignet sind auch Ethylen/Propylen/Dien-Polymerisate, sogenannte EPDM-Systeme. Prinzipiell können alle elastifizierenden Komponenten als "Dien-Kautschuke" eingesetzt werden, sofern sie kautschukelastisches Verhalten und die geforderte Spannungsrißkorrosionsbeständigkeit zeigen. Die Pfropfpolymerisate können in bekannter Weise durch radikalische Polymerisation von Styrol und Acrylnitril in Gegenwart des Kautschuks in Substanz, Emulsion (gemäß DT-AS 1 247 665 und 1 269 360), Suspension sowie kombinierte Verfahren wie Masse/Suspensionspolymerisation oder Lösungs/Fällungspolymerisation erhalten werden.

Zur Erläuterung des Erfindungsgegenstandes wurden als ABS-Polymerisate zwei, in den Beispielen 6 und 7 beschriebene Produkte verwendet. Dies sind ABS-Polymerisate aus einem durch Pfropfung von Styrol und Acrylnitril auf ein grobteiliges Polybutadien nach dem Emulsionspolymerisationsverfahren hergestellten Pfropfpolymerisat (der mittlere Teilchendurchmesser der in Latexform vorliegenden Polybutadienpfropfgrundlage liegt zwischen 0,3 und 0,4 /um), das mit einem Styrol-Acrylnitril-Copolymerisat durch gemeinsame Fällung der entsprechenden Latices gemischt wurde.

Erfindungsgemäß geeignete Polyalkylenester auf Basis von aromatischen Polycarbonsäuren, insbesondere Dicarbonsäuren, insbesondere auf Basis von Terephthalsäure und/oder Isophthalsäure, und von aliphatischen Polyolen insbesondere Diolen z.B. Ethylenglykol, Propandiol-1,3, Butandiol-1,4, Hexandiol-1,6 und 1,4-Bis-hydroxymethylcyclohexan haben mittlere Gewichtsmittelmolekulargewichte $\bar{M}_w$ von 10 000 bis 80 000. (Gemessen nach der Methode der Lichtzerstreuung in Phenol/1,2-Dichlorbenzol 50 Gew.-% : 50 Gew.-%).
Polyalkylenester wie z.B. Polyalkylenterephthalate können nach bekannten Verfahren beispielsweise aus Terephthalsäuredialkylester und dem entsprechenden Diol durch Umesterung erhalten werden (siehe z.B. US-Patente 2 647 885, 2 643 989, 2 534 028, 2 578 660, 2 742 494, 2 901 466). Beispielsweise geht man von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140°C auf 210° - 220°C erhöht. Der in Freiheit gesetzte Alkohol wird abdestilliert. Die Aufkondensation erfolgt anschließend bei Temperaturen von 210° - 280°C, der Druck wird dabei stufenweise bis auf weniger als 1 Torr erniedrigt, wobei das überschüssige Diol abdestilliert wird.

Als Polyester wurde ein Polybutylenterephthalat (Beispiele 8 und 9) verwendet. Dieses ist hergestellt aus Butandiol-1,4 und Terephthalsäuredimethylester nach bekannten Methoden.

Geeignete aliphatische Polyamide auf Basis von aliphatischen Polycarbonsäuren und aliphatischen Polyaminen im Sinne der Erfindung werden insbesondere durch Polykondensation von aliphatischen Diaminen, aliphatischen Dicarbonsäuren und Aminocarbonsäuren bzw. amidbildenden Derivaten dieser Verbindungsklassen, wie Dicarbonsäurehalogeniden, -estern, -nitrilen oder -amiden oder Lactamen, in bekannter Weise und unter üblichen Bedingungen erhalten. Bevorzugt eingesetzte Polyamide sind solche auf Basis von Hexamethylendiamin und Adipinsäure bzw. Sebacinsäure sowie auf Basis von ε-Aminocapronsäure bzw. ε-Caprolactam. Die erfindungsgemäß einzusetzenden Polyamide besitzen mittlere Gewichtsmittelmolekulargewichte $\bar{M}_w$ von 10 000 bis 100 000. (Gemessen nach der Methode der Lichtzerstreuung in 36 %iger Schwefelsäure) . Als Polyamide wurden Polyamid-6 (Beispiel 10), hergestellt aus ε-Caprolactam, sowie Polyamid-6,6 (Beispiel 11), hergestellt aus Hexamethylendiamin und Adipinsäure verwendet.

Geeignete Polyphenylenoxide sind insbesondere Poly-(2,6-dialkyl-1,4-phenylenoxide) und darunter ganz besonders die Poly-(2,6-di($C_1$-$C_4$-alkyl)-1,4-phenylenoxide) wie beispielsweise Poly-(2,6-dimethyl-1,4-phenylenoxid. Sie können nach bekannten Verfahren durch oxidierende Kondensation von 2,6-Dialkylphenolen mit Sauerstoff in Anwesenheit von Katalysatorkombinationen aus Kupfersalzen, wie beispielsweise Kupfer-(I)-chlorid und tertiären Aminen, z.B. Pyridin, hergestellt werden.

(Siehe beispielsweise DT-OS 2 126 434 und US-Patente 3 306 875, 3 221 080). Die erfindungsgemäßen Poly-(2,6-dialkyl-1,4-phenylenoxide) besitzen mittlere Gewichtsmittelmolekulargewichte von 2 000 bis 100 000, bevorzugt von 20 000 bis 60 000 (gemessen nach der Lichtzerstreuungsmethode in Chloroform).

Geeignete Polyolefine im Sinne der Erfindung sind Polymere von aliphatischen ungesättigten Kohlenwasserstoffen, wie beispielsweise Ethylen, Propylen, Butylen oder Isobutylen, die nach üblichem Verfahren z.B. durch Radikal- oder Ziegler-Natta-Polymerisation hergestellt werden können und mittlere Gewichtsmittelmolekulargewichte $\bar{M}_w$ von 25 000 bis 500 000 besitzen. (Gemessen nach der Methode der Lichtzerstreuung in Dekalin).

Es ist sowohl Hochdruckpolyolefin als auch Niederdruckpolyolefin geeignet. Die ungesättigten Kohlenwasserstoffe können mit anderen Vinylmonomeren in bekannter Weise copolymerisiert sein.

Zur näheren Erläuterung des Erfindungsgegenstandes wurde ein Niederdruckpolyethylen (Beispiele 4 und 5) verwendet.

Die erfindungsgemäßen Polycarbonatformmassen enthalten die Zusätze b), c), d) und e) in folgenden Mengen bezogen jeweils auf das Gesamtgewicht der Polycarbonatlegierung:

| | | |
|---|---|---|
| den Zusatz b) | in Mengen von | 0,01 bis 5 Gew.-%, |
| vorzugsweise | " | 0,1 bis 2 Gew.-% |
| insbesondere | " | 0,2 bis 1 Gew.-% |
| den Zusatz c) | " | 0,02 bis 1 Gew.-% |
| vorzugsweise | " | 0,04 bis 0,5 Gew.-% |
| insbesondere | " | 0,05 bis 0,2 Gew.-%, |
| den Zusatz d) | in Mengen von | 0,01 bis 3 Gew.-% |
| vorzugsweise | " | 0,03 bis 1 Gew.-% |
| insbesondere | " | 0,05 bis 0,7 Gew.-%, |
| den Zusatz e) | " | 1 bis 10 Gew.-%, |
| vorzugsweise | " | 3 bis 10 Gew.-%, |
| insbesondere | " | 5 bis 10 Gew.-%. |

Die Zusammensetzung der erfindungsgemäßen Polycarbonat-Legierungen wird so gewählt, daß die Zusätze b, c, d und e sich mit den zugrundeliegenden Polycarbonaten a) zu 100 Gew.-% ergänzen, was bedeutet, daß die Polycarbonatkomponente a) in Mengen zwischen 81 und 98,96 Gew.-%, bezogen auf Gesamtgewicht der Fünfkomponentenmischung, vorliegen kann.

Durch die Zugabe der Komponente e) können ohne Beeinflussung der Flammwidrigkeit der erfindungsgemäßen Polycarbonatformmassen deren Spannungsrißkorrosionsbeständigkeit verbessert werden.

Die Herstellung der erfindungsgemäßen Formmassen kann auf beliebige Weise erfolgen. Sie können in einem einstufigen Mischvorgang durch gleichzeitiges Zusammenmischen aller erfindungsgemäßen Komponenten oder durch sukzessives Zusammenmischen der Einzelkomponenten beispielsweise in Ein- oder Doppelwellenextrudern hergestellt werden.

So können die erfindungsgemäßen Formmassen hergestellt werden, indem man zu einer Mischung aus der Komponente a) und einer der Komponenten b) bis e) die restlichen Komponenten gleichzeitig oder sukzessiv zugibt.

Weiterhin können die erfindungsgemäßen Formmassen hergestellt werden, indem man die Komponenten b) bis e) mit einer Teilmenge der Komponente a) abmischt und diese Mischung mit der Restmenge der Komponente a) vereinigt.

Darüber hinaus kann die Herstellung der erfindungsgemäßen Formmassen so erfolgen, daß man zu einer Mischung der Komponente a) mit zwei der Komponenten b) bis e) die restlichen Komponenten gleichzeitig oder sukzessiv zugibt.

Die Mischung der Komponenten kann erfolgen:

1) durch sumultanes oder sukzessives Mischen der Einzelkomponenten a) bis e) und gemeinsames Extrudieren,

2) durch Lösen der Thermoplasten a) und e) in einem für den jeweiligen Thermoplasten geeigneten Lösungsmittel und anschließendes Ausdampfen der flüssigen Phasen und nachfolgender simultaner oder sukzessiver Zugabe der restlichen Komponenten b), c) und d) während des Extrudierens.

3) durch Herstellung eines Konzentrates aus den Komponenten b), c) und d) mit einer Teilmenge der Komponenten a) und nachfolgende Vereinigung mit der Restmenge a) unter simultaner oder sukzessiver Zugabe der Komponente e) während des Extrudierens,

4) durch Vermischen zweier Konzentrate (I) und (II), wobei
(I) besteht aus Mischungen der Komponente e) mit einem Teil der Komponenten b), c) und/oder d) und wobei
(II) besteht aus Mischungen einer Teilmenge der Komponente a) mit den jeweils komplementären Teil der Komponenten b), c) und/oder d) und

anschließender Verdünnung der beiden Konzentrate (I) und (II) durch die erforderliche Restmenge an Polycarbonat gemäß der Komponente a) während des Extrudierens.

Die erfindungsgemäßen Formmassen können während oder nach ihrer Herstellung nach den üblichen thermoplastischen Verarbeitungsmethoden wie durch Extrusion zu Formteilen und Folien mit verbesserter Flammwidrigkeit und erhöhter Temperaturbeständigkeit verarbeitet werden. Darüber hinaus können sie zu Gießfolien verarbeitet werden.

Die erfindungsgemäßen flammwidrigen Polycarbonatlegierungen können außerdem andere Materialien wie antistatische Mittel, Pigmente, Formtrennmittel, thermische Stabilisatoren, Ultraviolettlichtstabilisatoren und verstärkende Füllstoffe zugemischt werden.

Die zugesetzten Thermoplastkomponenten e) können ebenfalls in der üblichen Weise stabilisiert sein.

Die Verwendung der erfindungsgemäßen Formmassen kann überall dort erfolgen, wo bislang flammwidrige Polycarbonate mit Erfolg verwendet werden (z.B. im Elektrosektor und im Maschinenbausektor) und wo darüber hinaus noch erhöhte Anforderungen an die Spannungsrißkorrosionsbeständigkeit gestellt werden, beispielsweise in der Automobilindustrie, wo eine Beständigkeit gegen Benzin, Öl und Reinigungsmittel gefordert wird.

Die in den nachfolgenden Beispielen nach den oben beschriebenen Verfahren erhaltenen erfindungsgemäßen flammwidrigen Polycarbonatlegierungen wurden bei 280°C extrudiert und zu Granulat zerkleinert.

Ein Maß für die Spannungsrißkorrosionsbeständigkeit ist der Abfall der mechanischen Eigenschaften, wie z.B. Reißdehnung in Abhängigkeit der Randfaserdehnung, die durch eine definierte Biegung des Probekörpers erzeugt wird. Mit Hilfe einer Deformationsreihe unterschiedlicher Randfaserdehnungen wird die Grenzdehnung $\varepsilon_{bmax}$ gesucht, die unter den übrigen konstanten Bedingungen nicht zur Schädigung führt. Die Grenzdehnung ist abhängig vom Probezustand, vom Umgebungseinfluß, von der Temperatur und der Zeit.

Im einzelnen wird der Test wie folgt durchgeführt:

Von den erfindungsgemäßen Polymermischungen werden nach den bekannten Verfahren - Spritzgießen - Schulterstäbe von 2 mm Dicke hergestellt.Diese wurden mit zwei Klemmen kreisbogenförmig auf die mit dem Radius r gekrümmten Oberflächen von Schablonen aus chemikalienresistentem Material gespannt. Hierdurch entsteht in der Zugzone der Prüfstäbe eine Randfaserdehnung vom Betrag $\varepsilon_b \approx d\ (2r + d) \cdot 100$ [%] (d = Probendicke). Durch unterschiedlichen Schablonen-Krümmungsradien lassen sich die Randfaserdehnungen im Bereich der zu erwartenden Grenzdehnung in kleinen Schritten variieren.

Die aufgespannten Prüfkörper werden in Luft bei 80°C über 144 Stunden (6 Tage) lang behandelt. Anschließend wird gemäß DIN 53 455 die Reißdehnung gemessen.

Den untersuchten Wert der Reißdehnung trägt man in Abhängigkeit von der angewendeten Randfaserdehnung $\varepsilon_b$ auf. Im Falle einer Materialschädigung verläuft die Eigenschaftskurve stufenförmig. Die dem Steilabfall zuzuordnende Randfaserdehnung ist die gesuchte Grenzdehnung $\varepsilon_{bmax}$.

Dieses Prüfverfahren ist beschrieben in der im Carl Hanser-Verlag, München erscheinenden Zeitschrift "Kunststoffe" 65 (1975), 3, Seiten 155-157.

Die Prüfung der Flammwidrigkeit erfolgte nach dem Testverfahren gemäß Underwriters Laboratories, Inc. Bulletin 94, Verbrennungstest zur Klassifizierung von Materialien

(kurz UL-94 genannt). Hierbei werden aus Granulat der erfindungsgemäßen flammwidrigen Polycarbonatlegierungen im Spritzgußverfahren bei 300 - 310°C Teststäbe in zwei Probedicken von 1,6 mm und 3,2 mm hergestellt und nach UL-94 geprüft.

Gemäß diesem Restverfahren wurden die so geprüften Materialien entweder mit UL-94 V-O, UL-94 V-I und UL-94 V-II klassifiziert, und zwar auf der Basis der mit den 10 Proben erhaltenen Ergebnisse. Die Kriterien für jede dieser V-Klassifizierungen gemäß UL-94 sind kurz wie folgt:

UL-94 V-O Das durchschnittliche Flammen und/oder Glühen nach Entfernung der Zündflamme soll 5 Sekunden nicht überschreiten und keine der Proben soll Teilchen abtropfen, die absorbierende Baumwolle entzünden.

UL-94 V-I Das durchschnittliche Flammen und/oder Glühen nach Entfernung der Zündflamme soll 25 Sekunden nicht überschreiten und keine der Proben soll Teilchen abtropfen, die absorbierende Baumwolle entzünden.

UL-94 V-II Das durchschnittliche Flammen und/oder Glühen nach Entfernung der Zündflamme soll 25 Sekunden nicht überschreiten und die Proben tropfen flammende Teilchen ab, welche absorbierende Baumwolle entzünden.

Weiterhin wurde ein Teststab, der mehr als 25 Sekunden nach Entfernung der Zündflamme brannte, nicht nach UL-94 klassifiziert, sondern derselbe wurde nach den Standardbedingungen der vorliegenden Erfindung als "brennt" bezeichnet. Die Vorschrift UL-94 erfordert weiterhin, daß alle Teststäbe eines Versuchs die jeweilige V-Bewertung erfüllen müssen, anderenfalls erhalten die 10 Teststäbe die Bewertung des schlechtesten Einzelstabes. Wenn beispielsweise 1 Stab mit UL-94 V-II bewertet wird und die anderen 9 Teststäbe mit UL-94 V-0 bewertet werden, dann erhalten alle 10 Stäbe die Bewertung UL-94 V-II.

Die Ergebnisse sind in den Beispielen der nachfolgenden Tabelle 1 zusammengestellt. Das in den Beispielen verwendete aromatische Polycarbonat ist ein Homopolycarbonat auf Basis von Bisphenol A mit einem Gewichtsmittelmolekulargewicht von $\bar{M}_w$ = 30 000.

Als Beispiele 1, 2 und 3 dienen als Vergleichsbeispiele:

Tabelle 1

| Beispiele | Flammhemmende Additive b, c, d | Gew.-% | Thermoplastzusätze | Gew.-% | UL-94 1,6 mm | UL-94 3,2 mm | $\varepsilon_b$ max (%) |
|---|---|---|---|---|---|---|---|
| 1 | Trinatriumhexafluoroaluminat<br>N-Methyltetrachlorphthalimid<br>Hostaflon TF 2026[1)] | 0,25<br>0,50<br>0,10 | - | - | VO | VO | 1,4 |
| 2 | Kaliumhexafluorotitanat<br>N-Methyltetrachlorphthalimid<br>Hostaflon TF 2053[1)] | 0,25<br>0,25 | - | - | VO | VO | 1,4 |
| 3 | Kaliumhexafluorosilikat<br>N-Phenyltetrachlorphthalimid<br>Hostaflon TF 2026 | 0,25<br>0,50<br>0,10 | - | - | VO | VO | 1,4 |
| 4 | Kaliumhexafluorotitanat<br>N-Methyltetrachlorphthalimid<br>Hostaflon TF 2053 | 0,25<br>0,25<br>0,10 | Polyethylen [2)] | 5,0 | VO | VO | 1,6 |

Forts. Tabelle 1

| Beispiele | Flammhemmende Additive b, c, d | Gew.-% | Thermoplastzusätze | Gew.-% | UL-94 1,6 mm | UL-94 3,2 mm | $\varepsilon_b$ max (%) |
|---|---|---|---|---|---|---|---|
| 5 | Kaliumhexafluorosilikat<br>N-Phenyltetrachlorphthalimid<br>Hostaflon TF 2053 | 0,25<br>0,50<br>0,10 | Polyethylen | 7,5 | VO | VO | 1,8 |
| 6 | Triatriumhexafluoroaluminat<br>N-Phenyltetrachlorphthalimid<br>Hostaflon TF 2026 | 0,26<br>0,50<br>0,10 | ABS-Polymerisat[3)] | 2,5 | VO | VO | 1,7 |
| 7 | Kaliumhexafluorosilikat<br>N-Phenyltetrachlorphthalimid<br>Hostaflon TF 2026 | 0,25<br>0,50 | ABS-Polymerisat[3)] | 7,5 | VO | VO | 1,9 |
| 8 | Trinatriumhexafluoroaluminat<br>N-Phenyltetrachlorphthalimid<br>Hostaflon TF 2026 | 0,25<br>0,50<br>0,10 | Polybutylenterephthalat[4)] | 2,5 | VO | VO | 1,6 |

Forts. Tabelle 1

| Bei-spiele | Flammhemmende Additive b, c, d | Gew.-% | Thermoplastzusätze | Gew.-% | UL-94 1,6 mm | UL-94 3,2 mm | $\varepsilon_b$ max (%) |
|---|---|---|---|---|---|---|---|
| 9 | Kaliumhexafluorotitanat<br>N-Methyltetrachlorphthalimid<br>Hostaflon TF 2026 | 0,25<br>0,50<br>0,10 | Polybutylen-terephthalat 4) | 7,5 | VO | VO | 1,9 |
| 10 | Kaliumhexafluorotitanat<br>N-Methyltetrachlorphthalimid<br>Hostaflon TF 2026 | 0,25<br>0,50<br>0,10 | Polyamid-6 | 5,0 | VO | VO | 1,7 |
| 11 | Kaliumhexafluorosilikat<br>N-Phenyltetrachlorphthalimid<br>Hostaflon TF 2053 | 0,25<br>0,50<br>0,10 | Polyamid-6,6 | 7,5 | VO | VO | 1,8 |

1) Polytetrafluorethylen: Hersteller: Hoechst AG, hergestellt aus Tetrafluorethylen

Forts. Tabelle 1

2) Polyethylen: Hersteller: Chem. Werke Hüls, Mw 52 000, hergestellt aus Ethylen

3) ABS-Pfropfpolymerisat: Hersteller: Bayer AG, hergestellt aus 60 Gew.-% eines Polybutadien/SAN-Pfropfcopolymerisats und 40 Gew.-% eines SAN-Copolymerisats.

4) Polybutylenterephthalat: Hersteller: Bayer AG, Mw ~60 000, hergestellt aus Butandiol-1,4 und Terephthalsäuredimethylester

Forts. Tabelle 1

5) Polyamid-6: Hersteller: Bayer AG, relative Lösungsviskosität
(Gemessen in 1 %igen meta-Kresol-Lösungen)
$\eta_{rel.}$ = 2,93
hergestellt aus $\varepsilon$-Caprolactam

6) Polyamid-6,6: Hersteller: BASF, relative Lösungsviskosität
(Gemessen in 1 %igen meta-Kresol-Lösungen)
$\eta_{rel.}$ = 4,06
hergestellt aus Hexamethylendiamin und Adipinsäure

## Patentansprüche

1) Formmassen, bestehend aus

a) thermoplastischen aromatischen Polycarbonaten auf Basis von Bis-(hydroxyaryl)alkanen, Bis-(hydroyaryl)-cycloalkanen, 4,4'-Dihydroxy-diphenyläther, 4,4'-Dihydroxy-diphenylsulfid, 2,2-Bis-(3,5-dimethyl-4-hydroxyphenyl)-propan oder 4,4'-Dihydroxydiphenylsulfon

b) einer organischen Halogenverbindung,

c) einem Alkali- oder Erdalkalisalz einer anorganischen Protonensäure und/oder einer organischen Brönsted-Säure mit mindestens einem Kohlenstoffatom,

d) einem Stoff, der die Abtropfneigung von Polycarbonat reduziert,

dadurch gekennzeichnet, daß sie

e) einen weiteren Thermoplasten enthalten, der eine Grenzdehnung $\varepsilon_{max}$ von mindestens 1,4 % aufweist.

2) Formmassen gemäß Anspruch 1, dadurch gekennzeichnet, daß sie die Polycarbonatkomponente a) in Mengen von 81 bis 98,96 Gew.-%, bezogen auf die Summe der Komponenten a + b + c + d + e, enthalten.

3) Formmassen gemäß Anspruch 1, dadurch gekennzeichnet, daß sie die organische Halogenverbindung b) in Mengen von 0,01 bis 5 Gew.-%, bezogen auf die Summe der Komponenten a + b + c + d + e, enthalten.

4) Formmassen gemäß Anspruch 1, dadurch gekennzeichnet, daß sie die Alkali- und/oder Erdalkalisalze c) einer anorganischen Säure oder einer organischen Brönsted-Säure mit mindestens einem Kohlenstoffatom in Mengen von 0,02 bis 1 Gew.-%, bezogen auf die Summe der Komponenten a + b + c + d + e, enthalten.

5) Formmassen gemäß Anspruch 1, dadurch gekennzeichnet, daß sie den die Abtropfneigung der Polycarbonate reduzierenden Zusatz d) wie Polytetrafluorethylene, Polysiloxane oder Glasfasern in Mengen von 0,01 bis 3 Gew.-%, bezogen auf die Summe der Komponenten a + b + c + d + e, enthalten.

6) Formmassen gemäß Anspruch 1, dadurch gekennzeichnet, daß sie als weitere Thermoplasten e) ABS-Polymerisate, Polyalkylenester, aliphatische Polyamide, Polyphenylenoxide oder Polyolefine in Mengen von 1,0 bis 10 Gew.-%, bezogen auf die Summe der Komponenten a + b + c + d + e, enthalten.

7) Verfahren zur Herstellung von Formmassen gemäß den Ansprüchen 1 bis 6, dadurch gekennzeichnet, daß man entweder

1) zu einer Mischung aus der Komponente a) und einer der Komponenten b) bis e) die restlichen Komponenten gleichzeitig oder sukzessive zugibt,
oder

2) die Komponenten b) bis e) mit einer Teilmenge der Komponenten a) abmischt und diese Mischung mit der Restmenge der Komponente a) vereinigt,
oder

3) indem man zu einer Mischung der Komponente a) mit zwei der Komponenten b) bis e) die restlichen Komponenten gleichzeitig oder sukzessive zugibt.

8) Verwendung der Formmassen gemäß den Ansprüchen 1 bis 6, gegebenenfalls nach Zusatz von antistatischen Mitteln, Pigmenten, Formtrennmitteln, thermischen Stabilisatoren, Ultraviolettlichtstabilisatoren und verstärkenden Füllstoffen, zur Herstellung von Formteilen und Folien.

9) Verwendung der Formmassen gemäß den Ansprüchen 1 bis 8 zur Herstellung von Formteilen und Folien durch Spritzguß beziehungsweise Extrusion.

10) Verwendung von Formmassen gemäß den Ansprüchen 1 und 8 zur Herstellung von Gießfolien.

0019127

Europäisches Patentamt

# EUROPÄISCHER RECHERCHENBERICHT

Nummer der Anmeldung
EP 80 10 2271

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 371 481 (BAYER)<br>* Ansprüche 1-13 *<br>-- | 1,6-10 |
| | FR - A - 2 371 486 (BAYER)<br>* Ansprüche 1-6 *<br>-- | 1,6-10 |
| | FR - A - 2 388 011 (BAYER)<br>* Ansprüche 1-9 *<br>-- | 1,6-10 |
| | CHEMICAL ABSTRACTS, Band 89, Nr. 4, Juli 1978, Zusammenfassung Nr. 25313e, Seite 36, Columbus, Ohio, US,<br>& JP - A - 78 07757 (SUMITOMO)<br>* Zusammenfassung *<br>-- | 1,6-10 |
| | FR - A - 2 281 954 (BAYER)<br>* Ansprüche 1-3 *<br>-- | 1,6-10 |
| | FR - A - 2 318 901 (BAYER)<br>* Ansprüche 1-4 *<br>-- | 1,6-10 |
| | CHEMICAL ABSTRACTS, Band 84, Nr. 12, 22. März 1976, Zusammenfassung Nr. 75089d, Seite 37, Columbus, Ohio, US<br>& JP - A - 75 111149 (MITSUBISHI)<br>* Zusammenfassung *<br>-- | 1,6-10 |

KLASSIFIKATION DER ANMELDUNG (Int.Cl.[3])

C 08 L 69/00

RECHERCHIERTE SACHGEBIETE (Int. Cl.[3])

C 08 L 69/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prufer |
|---|---|---|
| Den Haag | 13-08-1980 | DECOCKER |

Europäisches Patentamt

# EUROPÄISCHER RECHERCHENBERICHT

Nummer der Anmeldung
EP 80 10 2271
-2-

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | CHEMICAL ABSTRACTS, Band 89, Nr. 16, 16. Oktober 1978, Zusammenfassung Nr. 130257n, Seite 25, Columbus, Ohio ,US, D.C. WAHRMUND et al.: "Polyester-polycarbonate blends. I. Poly(butylene terephthalate)"<br>& JOURNAL OF APPLIED POLYM.SCIENCE 1978, 22(8), 2155-64<br>* Zusammenfassung *<br>-- | 1,6-10 | |
| | CHEMICAL ABSTRACTS, Band 85, Nr. 4, 26. Juli 1976, Zusammenfassung Nr. 22362b, Seite 40, Columbus, Ohio, US,<br>& JP - A - 76 30255 (MITSUBISHI)<br>* Zusammenfassung *<br>-- | 1,6-10 | RECHERCHIERTE SACHGEBIETE (Int. Cl. 3) |
| | US - A - 3 221 080 (D.W. FOX)<br>* Ansprüche 1-12 *<br>-- | 1,6-10 | |
| | FR - A - 2 275 526 (BAYER)<br>* Ansprüche 1-3 *<br>-- | 1,6-10 | |
| | CHEMICAL ABSTRACTS, Band 84, Nr. 18, 3. Mai 1976, Zusammenfassung Nr. 122881t, Seite 41, Columbus, Ohio, US,<br>& JP - A - 75 130 847 (TEIJIN)<br>* Zusammenfassung *<br>-- | 1,6-10 | |

./.

Europäisches Patentamt

# EUROPÄISCHER RECHERCHENBERICHT

Nummer der Anmeldung

EP 80 10 2271

-3-

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | BE - A - 634 842 (GENERAL ELECTRIC)<br>* Ansprüche 1-15 *<br>-- | 1,6-10 | |
| | US - A - 3 742 085 (C.A. BIALOUS)<br>* Ansprüche 1-5 *<br>-- | 1-5 | |
| | FR - A - 2 377 436 (MOBAY)<br>* Ansprüche 1-12 *<br>---- | 1-5 | RECHERCHIERTE SACHGEBIETE (Int. Cl. 3) |